# EUROPÄISCHE PATENTSCHRIFT

(11) **EP 2 236 892 B1**
(45) Veröffentlichungstag und Bekanntmachung des Hinweises auf die Patenterteilung: **19.06.2013**
(21) Anmeldenummer: 09004810.9
(22) Anmeldetag: 01.04.2009
(51) Int. Cl.: F16L 23/04, F01N 13/18

(54) **Rohrleitungsverbindung**
Pipe coupling
Raccordement de tuyaux

(43) Veröffentlichungstag der Anmeldung: 06.10.2010
(73) Patentinhaber: ElringKlinger AG, 72581 Dettingen (DE)
(72) Erfinder: Brenndörfer, Reinhard, 82538 Geretsried (DE)
(74) Vertreter: Hoeger, Stellrecht & Partner Patentanwälte

(56) Entgegenhaltungen:
- WO-A1-2005/043025
- DE-A1- 2 425 121
- DE-C1- 3 725 744
- DE-U1- 20 317 425
- GB-A- 1 267 540
- US-A- 5 947 533
- US-A1- 2006 123 775

## Beschreibung

Die Erfindung betrifft eine Rohrleitungsverbindung, insbesondere für Abgasleitungen von Kraftfahrzeugen, umfassend eine erste Rohrleitung und eine zweite Rohrleitung, welche fluidführend miteinander verbunden sind, wobei die erste Rohrleitung ein erstes Flanschelement und die zweite Rohrleitung ein zweites Flanschelement aufweist, wobei das erste Flanschelement und das zweite Flanschelement einen Einbauraum für eine Graphitdichtung ausbilden, wobei die Graphitdichtung unter Verpressung im Einbauraum aufgenommen ist und wobei ein Befestigungsmittel das erste Flanschelement mit dem zweiten Flanschelement verbindet.

Aus der WO 2005/043025 A1 ist eine Rohrleitungsverbindung bekannt, bei der die Flanschelemente beidseitig an einer Graphitdichtung anliegen und diese verpressen. Die Graphitdichtung ist bei dieser Rohrleitungsverbindung ein tragendes Bauteil und muss deswegen sehr hart ausgeführt sein. Bei Belastung der Rohrleitungen kann die Graphitdichtung leicht verformt werden. Insbesondere, wenn die erste Rohrleitung relativ zur zweiten Rohrleitung geneigt wird, entsteht im Bereich der Graphitdichtung eine einseitige Belastung der Graphitdichtung. In diesem Bereich wird die Graphitdichtung überpresst und deformiert. Sobald die Achsen der Rohrleitungen wieder miteinander fluchtend ausgerichtet werden, können durch die Deformierung der Graphitdichtung Spalte und Leckagen entstehen.

Des Weiteren wird durch die Deformierungen der Graphitdichtung die Schließkraft des Befestigungsmittels zumindest bereichsweise reduziert. Die Rohrleitungen können sich innerhalb der Rohrleitungsverbindung lockern, so dass die gesamte Rohrleitungsverbindung nicht mehr dicht ist.

Aus der DE 203 17 425 U1 ist eine Rohrleitungsverbindung nach dem Oberbegriff des Patentanspruchs 1 bekannt, bei welcher ein umfassender Graphitdichtring in einem durch ein erstes und ein zweites Flanschelement gebildeten Einbauraum angeordnet ist, wobei eine Verpressung des Dichtrings durch Begrenzungsmittel begrenzt ist.

Es ist erkannt worden, dass ein Begrenzungsmittel ein Mindestvolumen des Einbauraums sicherstellt. Die Graphitdichtung kann nicht über ein vordefiniertes Maß hinaus verpresst oder deformiert werden, wenn auf die Rohrleitungen Lasten einwirken. Des Weiteren ist erkannt worden, dass ein Begrenzungsmittel einen Kraftnebenschluss und damit eine Begrenzung der Belastung der Graphitdichtung bewirkt. Die Graphitdichtung wird bei der Montage einmalig definiert verpresst und nimmt eine gewünschte Geometrie an. Diese Geometrie ändert sich im dauerhaften Gebrauch der Rohrleitungsverbindung auch bei belasteten Rohrleitungen im Wesentlichen nicht mehr. Insoweit werden Leckagen oder Spalte erfindungsgemäß vermieden und eine dauerhafte Dichtheit realisiert.

Der Erfindung liegt daher die Aufgabe zugrunde, eine Rohrleitungsverbindung der eingangs genannten Art derart auszugestalten und weiterzubilden, dass sie nach einfacher Montage auch bei zeitweise belasteten Rohrleitungen eine dauerhaft hohe Dichtheit zeigt.

Die vorliegende Erfindung löst die zuvor genannte Aufgabe durch eine Rohrleitungsverbindung mit den Merkmalen des Patentanspruchs 1.

Dabei ist die Rohrleitungsverbindung so ausgebildet, dass ein Begrenzungsmittel vorgesehen ist, welches die Verpressung der Graphitdichtung begrenzt.

Erfindungsgemäß weist die Graphitdichtung eine Stoßstelle auf, an welche zwei freie Enden der Graphitdichtung miteinander dichtend verpresst sind. Durch diese konkrete Ausgestaltung kann die Graphitdichtung wie ein Kolbenring nahezu kraftlos auf eine Rohrleitung auf- oder abgeschoben werden.

Die Stoßstelle erlaubt eine Aufweitung des Graphitdichtrings, wenn die Rohrleitung sich in ihrem Außendurchmesser aufweitet.

Das Begrenzungsmittel könnte die Flanschelemente gegenüber der Graphitdichtung abstützen. Hierdurch ist sichergestellt, dass die Belastung der Graphitdichtung bei Belastung der Rohrleitungen nahezu unverändert bleibt und die Graphitdichtung nicht über ein vorgegebenes Maß deformiert wird.

Das Begrenzungsmittel könnte an den Flanschelementen angeformt sein. Diese konkrete Ausgestaltung bewirkt einen teilearmen Aufbau der Rohrleitungsverbindung.

Das Begrenzungsmittel könnte an einer Stoßstelle der Flanschelemente anliegen. Die Flanschelemente liegen dadurch direkt aneinander und stützen sich gegenseitig relativ zur Graphitdichtung ab. Eine durch das Befestigungsmittel eingeleitete Spannkraft bewirkt nach Anlage der Flanschelemente aneinander keine weitere Deformation der Graphitdichtung, sondern dient der äußeren Fixierung der Flanschelemente aneinander.

Sowohl das erste Flanschelement als auch das zweite Flanschelement könnten einen trichterförmig radial nach außen gewölbten Kragen aufweisen, wobei von mindesten einem der Kragen ein zu den Rohrleitungsachsen parallel orientierte Rand als Begrenzungsmittel abragt. Die trichterförmige Ausgestaltung der Flanschelemente bewirkt ein Verpressen der Graphitdichtung derart, dass sie eine im Querschnitt trapezförmige Form einnimmt und sich in radialer Richtung verjüngt. Der parallel zu mindestens einer Rohrleitungsachse orientierter Rand übergreift die Graphitdichtung von außen und verhindert deren radiales Auswandern. Des Weiteren kommt der Rand an einer Stoßstelle der Flanschelemente zur Anlage und wirkt dadurch als Begrenzungsmittel. Der Rand stellt sicher, dass das Volumen des Einbauraums nicht über ein vordefiniertes Maß reduziert wird. Vor diesem Hintergrund ist auch denkbar, dass an jedem der Flanschelemente ein Rand ausgebildet ist. Die Länge des Randes erlaubt daher eine Einstellung des Mindestvolumens des Einbauraums.

Das Befestigungsmittel könnte als U-förmige oder V-förmige Klemmschelle ausgebildet sein. Ein solches Befestigungsmittel kann zwei Flanschelemente umgreifen und aneinanderziehen, indem nämlich der Durchmesser der Klemmschelle vermindert wird.

Die Graphitdichtung könnte als Graphitdichtring ausgebildet und aus einer Flechtpackung aus Graphitfolie gefertigt sein. Eine Flechtpackung aus Graphitfolie ist äußerst weich und kann sehr leicht in eine gewünschte Form verpresst werden. Bei einer Flechtpackung wird deren Flechtstruktur beim Verpressen der Graphitdichtung geschlossen, so dass die Graphitdichtung wie ein massiver gepresster Ring wirkt. Bei sehr geringer Kraftbeaufschlagung kann die Flechtpackung sich an unebene oder zerkratzte Dichtflächen anschmiegen und diese zuverlässig abdichten. Eine Flechtpackung erlaubt eine Kompensierung von großen Fertigungstoleranzen und Fehlern der Flanschelemente. Die Flanschelemente können vor diesem Hintergrund aus relativ dünnem Blech oder dünnwandigem Rohr gefertigt sein. Die Flanschelemente könnten gezogen, gedrückt, gerollt, gepresst oder geschweißt sein.

Die Graphitdichtung könnte dreifach diagonal geflochten sein. Diese Graphitdichtung zeichnet sich durch eine gute Querschnittsstabilität und dichte Flechtstruktur aus.

Die Graphitdichtung könnte zweifach diagonal geflochten sein. Diese Graphitdichtung zeichnet sich durch eine gute Elastizität aus.

Durch die Verwendung einer Flechtpackung aus Graphitfolie ist es besonders vorteilhaft möglich, die zwei freien Enden wieder dichtend aneinander anzulegen, ohne dass deren Stoßstelle optisch erkennbar ist. Die Weichheit der Flechtpackung erlaubt diesen überraschenden Heilungseffekt an der Stoßstelle der Graphitdichtung. Vorzugsweise sind die freie Enden abgeschrägt ausgebildet, um eine große Anlagefläche füreinander auszubilden.

Die Rohrleitungen könnten einen Außendurchmesser von 100 bis 400 mm aufweisen. Überraschend können mit der hier beschriebenen Rohrleitungsverbindung, welche als Graphitdichtung eine weiche Flechtpackung aus Graphitfolie aufweist, Rohrleitungen zuverlässig dicht aneinandergekoppelt werden. Die Flanschelemente neigen nach Stauchung, Aufschweißen oder Aufdrücken auf eine Rohrleitung zu einer Welligkeit, die mit den bekannten Dichtkonzepten nicht ausgeglichen werden kann. Insbesondere bietet eine Schweißnaht auf einem Flanschelement eine Wulst aus, die abgeschliffen oder ausgeglichen werden muss, um eine zuverlässige Dichtheit zu bewirken. Die Flechtpackung kann überraschend stark nachverformt werden und gleicht überraschend auch gröbere Unebenheiten der Rohrleitungen bzw. Flanschelemente aus.

Die Rohrleitungsverbindung kann insbesondere in Abgasleitungen von Kraftfahrzeugen Verwendung finden. Derzeit wird die Harnstofftechnik im Rahmen der Abgasreinhaltung weiterentwickelt, da seit 1. Oktober 2006 die Euro-4-Norm für Abgase gilt - und bereits zum 1. Oktober 2009 die strengere Euro-5-Norm gelten wird. Bis zum Jahr 2012 ist damit zu rechnen, dass der europäische Harnstoffbedarf für Nutzfahrzeuge bereits bei etwa 3,5 Millionen Tonnen liegen wird.

Harnstoff-Wasser-Lösungen sind umweltschonende Chemikalien zur Abgasreinigung, welche bislang in Nutzfahrzeugen (insbesondere bei LKW und Omnibussen) verwendet werden. Harnstoff-Wasser-Lösungen werden zur Reduzierung von Stickoxiden auch in stationären Motoren und zur Rauchgasreinigung in Kraftwerken genutzt.

Für die Verwendung von Harnstoff-Wasser-Lösungen ist an Kraftfahrzeugen ein zusätzlicher Tank angebracht. Der Verbrauch von Harnstoff-Wasser-Lösung beträgt etwa 4-6 % des normalen Kraftstoffverbrauchs und entspricht bei schweren LKW etwa 1,4 Liter auf einer Strecke von 100 km.

Eine bekannte Harnstoff-Wasser-Lösung ist AdBlue. AdBlue (DIN 70070/AUS32) ist der Markenname für eine wasserklare, synthetisch hergestellte 32,5 %-ige Lösung von hochreinem Harnstoff in demineralisiertem Wasser, die zur Nachbehandlung von Abgasen in einem SCR-Katalysator benutzt wird. Dabei wird durch selektive katalytische Reduktion (englisch *selective catalytic reduction,* SCR) der Ausstoß von Stickoxiden (NOx) um etwa 90 % (im Stationärbetrieb) reduziert. Der Einsatz von AdBlue im PKW-Bereich ist zur Zeit in der Testphase.

Das SCR-Verfahren nutzt Ammoniak, welches an Bord des Fahrzeugs aus Hamstoff gewonnen wird. Die in einem separaten Tank liegende Harnstoff-Wasser-Lösung wird z. B. mittels Dosierpumpe oder Injektor dosiert in den Abgasstrom eingespritzt und sorgt im SCR-Katalysator für eine chemische Reaktion. Hierbei werden nur die Stickoxide in Stickstoff und Wasserdampf umgewandelt. Das Verhältnis von Harnstofflösung zu Dieselkraftstoff beträgt etwa 1:20 bis 1:30

Überraschend eignet sich die hier beschriebene Rohrleitungsverbindung zur Verwendung in einer Anlage, welche Harnstoff zur Reinigung von Abgasen verwendet. Überraschend eignet sich auch eine Graphitdichtung aus einer Flechtpackung aus Graphitfolie zur Verwendung in einer Anlage, welche Harnstoff zur Reinigung von Abgasen verwendet. Eine solche Graphitdichtung ist platzsparend.

Beim Einsprühen einer Harnstoff-Wasser-Lösung in die Abgasleitungen eines Kraftfahrzeugs entsteht ein Aerosol, das mit dem NOx im Abgas reagiert. Ein geringer Teil der Harnstoff-Wasser-Lösung verdampft jedoch nicht und kann aus Einsprühdüsen in die Flanschelementverbindungen des Stands der Technik tropfen. Dort kristallisiert der Harnstoff und bildet harte Beläge und Ablagerungen an den Leitungswänden sowie in allen Taschen und Spalten, in welche die Lösung eindringen kann. Die Harnstoff-Wasser-Lösung dringt durch Osmose auch in poröse Dichtungen ein oder rinnt in Fugen von Blechdichtungen. Die Kristallisation des Harnstoffs führt zu einer Verhärtung und Versprödung der betroffenen Bereiche, so dass keine Rückfederungseigenschaften mehr ausgebildet werden können. Bei für Abgasleitungen typischen wechselnden thermischen Belastungen bilden sich immer neue Spalte und Ritzen aus, in die Harnstoff eindringen kann. Schließlich kann der Harnstoff sogar nach außen treten und von Rohrleitungsverbindungen des Stands der Technik in Form von Stalaktiten oder Zapfen abragen.

Es hat sich gezeigt, dass Graphitdichtringe aus Flechtpackungen aus Graphitfolie dauerhaft elastisch bleiben und Harnstoff überraschend nicht in die deren Flechtstruktur eindringt, obwohl man dies erwarten würde. Schließlich besteht die Flechtstruktur aus einzelnen Segmenten, die aneinandergepresst sind. Infolge der guten Anschmiegfähigkeit der Graphitdichtringe an die teilweise unebenen Flanschelemente, werden sogar Ritzen und Spalten vermieden, in denen Harnstoff kristallisieren kann. der zuvor beschriebene Effekt hat sich insbesondere bei Verwendung von AdBlue positiv gezeigt.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels der erfindungsgemäßen Lehre anhand der Zeichnung zu verweisen.

In Verbindung mit der Erläuterung des bevorzugten Ausführungsbeispiels anhand der Zeichnung werden auch im Allgemeinen bevorzugte Ausgestaltungen und Weiterbildungen der Lehre erläutert.

### Kurzbeschreibung der Zeichnung

In der Zeichung zeigen
- Fig. 1: eine Schnittzeichnung einer Rohrleitungsverbindung mit einer U- bzw. V-förmigen Klemmschelle,
- Fig. 2: eine Detailansicht des Einbauraums für die Graphitdichtung,
- Fig. 3: zwei Ansichten des Graphitdichtrings, der aus einer Flechtpackung aus einer Graphitfolie gefertigt ist,
- Fig. 4: zwei Ansichten einer dreifach diagonal geflochtenen Graphitdichtung und
- Fig. 5: zwei Ansichten einer zweifach diagonal geflochtenen Graphitdichtung.

### Ausführung der Erfindung

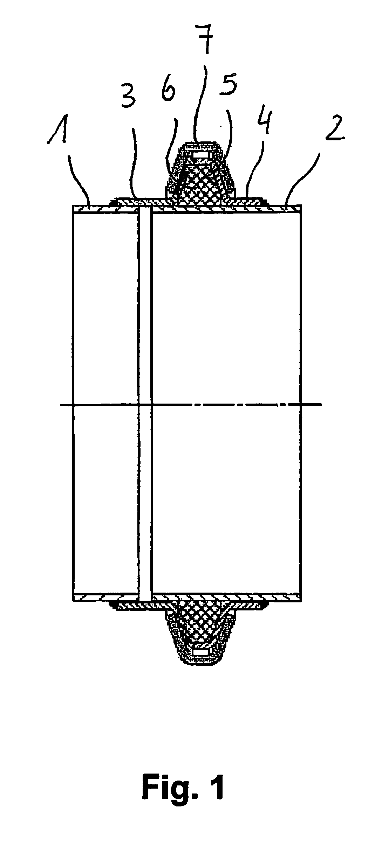

Fig. 1 zeigt eine Rohrleitungsverbindung, umfassend eine erste Rohrleitung 1 und eine zweite Rohrleitung 2, welche fluidführend miteinander verbunden sind, wobei die erste Rohrleitung 1 ein erstes Flanschelement 3 und die zweite Rohrleitung 2 ein zweites Flanschelement 4 aufweist, wobei das erste Flanschelement 3 und das zweite Flanschelement 4 einen Einbauraum 5 für eine Graphitdichtung 6 ausbilden, wobei die Graphitdichtung 6 unter Verpressung im Einbauraum 5 aufgenommen ist und wobei ein Befestigungsmittel 7 das erste Flanschelement 3 mit dem zweiten Flanschelement 4 verbindet.

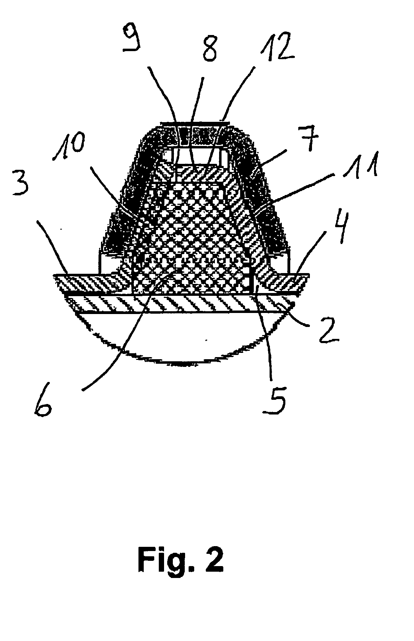

In Fig. 2 ist gezeigt, dass die Rohrleitungsverbindung ein Begrenzungsmittel 8 aufweist, welches die Verpressung der Graphitdichtung 6 begrenzt. Das Begrenzungsmittel 8 stellt ein Mindestvolumen des Einbauraums 5 sicher. Die Graphitdichtung 6 kann nicht über ein vordefiniertes Maß hinaus verpresst oder deformiert werden, wenn auf die Rohrleitungen 1, 2 Lasten einwirken. Das Begrenzungsmittel 8 bewirkt einen Kraftnebenschluss und damit eine Entlastung der Graphitdichtung 6. Die Graphitdichtung 6 wird bei der Montage einmalig definiert verpresst und nimmt eine gewünschte Geometrie an. Diese Geometrie ändert sich im dauerhaften Gebrauch der Rohrleitungsverbindung auch bei belasteten Rohrleitungen 1, 2 im Wesentlichen nicht mehr. Insoweit werden Leckagen oder Spalte vermieden und eine dauerhafte Dichtheit realisiert. Das Begrenzungsmittel 8 stützt die Flanschelemente 3, 4 gegenüber der Graphitdichtung 6 ab. Hierdurch ist sicher gestellt, dass die Graphitdichtung 6 bei Belastung der Rohrleitungen 1, 2 nur begrenzt belastet und nicht über ein vorgegebenes Maß deformiert wird. Das Begrenzungsmittel 8 ist am zweiten Flanschelement 4 angeformt. Diese konkrete Ausgestaltung bewirkt einen teilearmen Aufbau der Rohrleitungsverbindung.

Das Begrenzungsmittel 8 liegt an an einer Stoßstelle 9 der Flanschelemente 3, 4 an. Die Flanschelemente 3, 4 liegen dadurch direkt aneinander und stützen sich gegenseitig relativ zur Graphitdichtung 6 ab. Eine durch das Befestigungsmittel 7 eingeleitete Spannkraft bewirkt nach Anlage der Flanschelemente 3, 4 aneinander keine weitere Deformation der Graphitdichtung 6, sondern dient der äußeren Fixierung der Flanschelemente 3, 4 aneinander.

Sowohl das erste Flanschelement 3 als auch das zweite Flanschelement 4 weisen jeweils einen trichterförmig radial nach außen gewölbten Kragen 10, 11 auf, wobei vom Kragen 11 des zweiten Flanschelements 4 ein zu den Rohrleitungsachsen parallel orientierter Rand 12 als Begrenzungsmittel 8 abragt. Die trichterförmige Ausgestaltung der Flanschelemente 3, 4 bewirkt ein Verpressen der Graphitdichtung 6 derart, dass sie eine im Querschnitt rapezförmige Form einnimmt und sich in radialer Richtung verjüngt. Der parallel zu mindestens einer Rohrleitungsachse orientierte Rand 12 übergreift die Graphitdichtung 6 von außen und verhindert deren radiales Auswandern. Des Weiteren kommt der Rand 12 an der Stoßstelle 9 der Flanschelemente 3, 4 zur Anlage und wirkt dadurch als Begrenzungsmittel 8. Der Rand 12 stellt sicher, dass das Volumen des Einbauraums 5 nicht über ein vordefiniertes Maß reduziert wird.

Das Befestigungsmittel 7 ist als U-förmige Klemmschelle ausgebildet. Das Befestigungsmittel 7 umgreift die zwei Flanschelemente 3, 4 und zieht diese aneinander, indem nämlich der Durchmesser der Klemmschelle vermindert wird.

Die Graphitdichtung 6 ist als Graphitdichtring ausgebildet und aus einer Flechtpackung aus Graphitfolie gefertigt. Eine Flechtpackung aus Graphitfolie ist äußerst weich und kann sehr leicht in eine gewünschte Form verpresst werden. Bei einer Flechtpackung wird deren Flechtstruktur beim Verpressen der Graphitdichtung 6 geschlossen, so dass die Graphitdichtung 6 wie ein massiver gepresster Ring wirkt. Bei sehr geringer Kraftbeaufschlagung kann die Flechtpackung sich an unebene oder zerkratzte Dichtflächen anschmiegen und diese zuverlässig abdichten. Eine Flechtpackung erlaubt eine Kompensierung von Fertigungstoleranzen und Fehlern der Flanschelemente 3, 4. Die Flanschelemente 3, 4 sind jeweils auf die Rohrleitungen 1, 2 aufgeschweisst und bestehen aus dünnem Blech.

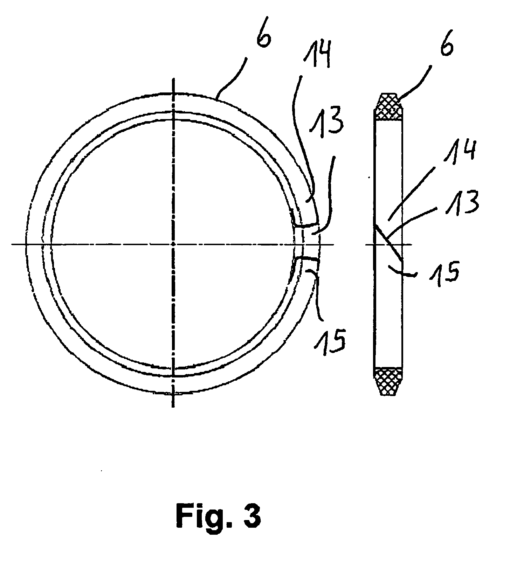

Fig. 3 zeigt zwei Ansichten von Graphitdichtungen 6. Links in Fig. 3 ist eine Draufsicht auf ihre Ringform dargestellt, rechts in Fig. 3 ist eine Schnittansicht dargestellt, welche ihre Trapezform zeigt.

Die Graphitdichtungen 6 weisen je eine Stoßstelle 13 auf, an welcher zwei freie Enden 14, 15 der Graphitdichtungen 6 miteinander dichtend verpresst sind. Durch diese konkrete Ausgestaltung kann eine Graphitdichtung 6 wie ein Kolbenring nahezu kraftlos auf eine Rohrleitung 1, 2 oder ein Flanschelement 3, 4 auf- oder abgeschoben werden. Die Stoßstelle 13 der Graphitdichtungen 6 erlaubt eine Aufweitung des Graphitdichtrings, wenn die Rohrleitung 1, 2 sich in ihrem Außendurchmesser aufweitet. Durch die Verwendung einer Flechtpackung aus Graphitfolie ist es besonders vorteilhaft möglich, die zwei freien Enden 14, 15 wieder dichtend aneinander anzulegen, ohne dass die Stoßstelle 13 einer Graphitdichtung 6 optisch erkennbar ist. Die Weichheit der Flechtpackung erlaubt diesen überraschenden Heilungseffekt an der Stoßstelle 13 einer Graphitdichtung 6. Die freien Enden 14, 15 sind rechts in Fig. 3 vorzugsweise abgeschrägt ausgebildet, um eine große gegenseitige Anlagefläche füreinander auszubilden, können aber auch gerade sein, wie dies links in Fig. 3 dargestellt ist.

Die hier beschriebenen Graphitdichtungen 6 sind bei Temperaturen von bis zu 500° C betriebstauglich und nahezu gegen alle Medien außer Sauerstoff beständig. Überraschend eignen sich die Graphitdichtungen 6 aus einer Flechtpackung aus Graphitfolie gemäß Fig. 3 zur Verwendung in einer Anlage, welche Harnstoff zur Reinigung von Abgasen verwendet.

Die hier beschriebene Rohrleitungsverbindung zeigt bei einem Außendurchmesser der Rohrleitungen 1, 2 von 120 mm bei einem Innendruck von 1 bar eine Leckage von 0,1 Liter/ Minute.

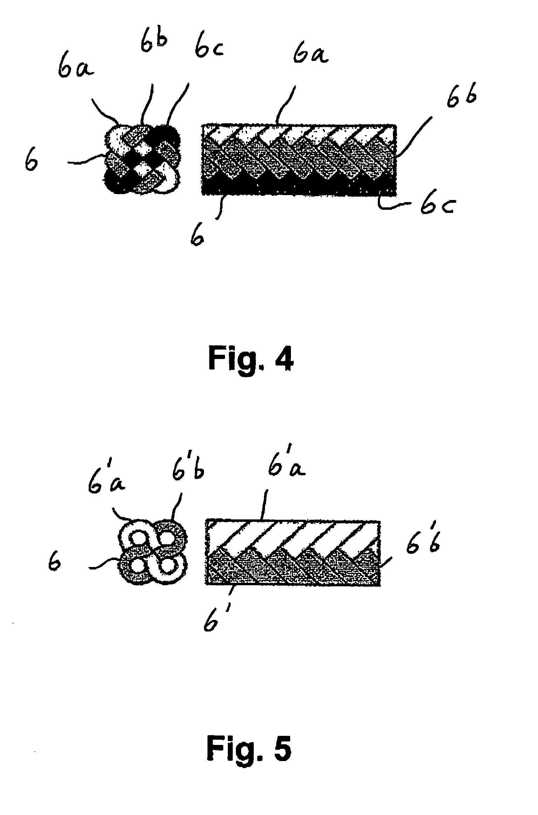

Fig. 4 zeigt beispielhaft eine dreifach diagonal geflochtene Graphitdichtung 6, die aus einer Flechtpackung aus Graphitfolie gefertigt ist. Die Graphitfolie umfasst mehrere miteinander verflochtene Flechtgarne, wobei beispielhaft die Felchtgarne 6a, 6b, 6c gekennzeichnet sind. Die Flechtpackung aus Graphitfolie ist äußerst weich und kann sehr leicht in eine gewünschte Form verpresst werden. Bei einer Flechtpackung wird deren Flechtstruktur, nämlich die Zwischenräume zwischen den Flechtgamen 6a, 6b, 6c, beim Verpressen der Graphitdichtung 6 geschlossen, so dass die Graphitdichtung wie ein massiver gepresster Ring wirkt. Diese Graphitdichtung 6 zeichnet sich durch eine gute Querschnittsstabilität und dichte Flechtstruktur aus. Fig. 4 zeigt zwei Ansichten der Graphitdichtung 6. Links in Fig. 4 ist eine Schnittansicht der Graphitdichtung 6 und rechts eine Draufsicht auf die Graphitdichtung 6 gezeigt. Fig. 5 zeigt beispielhaft eine zweifach diagonal geflochtene Graphitdichtung 6', die aus einer Flechtpackung aus Graphitfolie gefertigt ist. Die Graphitfolie umfasst mehrere miteinander verflochtene Flechtgame, wobei beispielhaft die Flechtgame 6'a, 6'b gekennzeichnet sind. Die Flechtpackung aus Graphitfolie ist äußerst weich und kann sehr leicht in eine gewünschte Form verpresst werden. Bei einer Flechtpackung wird deren Flechtstruktur, nämlich die Zwischenräume zwischen den Flechtgamen 6'a, 6'b, beim Verpressen der Graphitdichtung 6' geschlossen, so dass die Graphitdichtung wie ein massiver gepresster Ring wirkt. Diese Graphitdichtung 6' zeichnet sich durch eine gute Elastizität aus. Fig. 5 zeigt zwei Ansichten der Graphitdichtung 6'. Links in Fig. 5 ist eine Schnittansicht der Graphitdichtung 6' und rechts eine Draufsicht auf die Graphitdichtung 6' gezeigt.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Ansprüche verwiesen.

Abschließend sei ganz besonders hervorgehoben, dass das zuvor gewählte Ausführungsbeispiel lediglich zur Erörterung der erfindungsgemäßen Lehre dient, diese jedoch nicht auf dieses Ausführungsbeispiel einschränkt.

## Patentansprüche

1. Rohrleitungsverbindung, insbesondere für Abgasleitungen von Kraftfahrzeugen, umfassend eine erste Rohrleitung (1) und eine zweite Rohrleitung (2), welche fluidführend miteinander verbunden sind, wobei die erste Rohrleitung (1) ein erstes Flanschelement (3) und die zweite Rohrleitung (2) ein zweites Flanschelement (4) aufweist, wobei das erste Flanschelement (3) und das zweite Flanschelement (4) einen Einbauraum (5) für eine Graphitdichtung (6, 6') ausbilden, wobei die Graphitdichtung (6, 6') unter Verpressung im Einbauraum (5) aufgenommen ist und wobei ein Befestigungsmittel (7) das erste Flanschelement (3) mit dem zweiten Flanschelement (4) verbindet, und wobei ein Begrenzungsmittel (8) vorgesehen ist, welches die Verpressung der Graphitdichtung (6, 6') begrenzt,
**dadurch gekennzeichnet, dass** die Graphitdichtung (6, 6') eine Stoßstelle (13) aufweist, an welcher zwei freie Enden (14, 15) der Graphitdichtung (6, 6') miteinander dichtend verpresst sind.

2. Rohrleitungsverbindung nach Anspruch 1, **dadurch gekennzeichnet, dass** das Begrenzungsmittel (8) die Flanschelemente (3, 4) gegenüber der Graphitdichtung (6, 6') abstützt.

3. Rohrleitungsverbindung nach Anspruch 1 oder 2, **dadurch gekennzeichnet, dass** das Begrenzungsmittel (8) an den Flanschelementen (3, 4) angeformt ist.

4. Rohrleitungsverbindung nach Anspruch 3, **dadurch gekennzeichnet, dass** das Begrenzungsmittel (8) an einer Stoßstelle (9) der Flanschelemente (3, 4) anliegt.

5. Rohrleitungsverbindung nach einem der Ansprüche 1 bis 4, **dadurch gekennzeichnet, dass** sowohl das erste Flanschelement (3) als auch das zweite Flanschelement (4) einen trichterförmig radial nach außen gewölbten Kragen (10, 11) aufweist, wobei von mindestens einem der Kragen (11) ein zu den Rohrleitungsachsen parallel orientierter Rand (12) als Begrenzungsmittel (8) abragt.

6. Rohrleitungsverbindung nach einem der Ansprüche 1 bis 5, **dadurch gekennzeichnet, dass** das Befestigungsmittel (7) als U-förmige oder V-förmige Klemmschelle ausgebildet ist.

7. Rohrleitungsverbindung nach einem der Ansprüche 1 bis 6, **dadurch gekennzeichnet, dass** die Graphitdichtung (6, 6') als Graphitdichtring ausgebildet ist und aus einer Flechtpackung aus Graphitfolie gefertigt ist.

8. Rohrleitungsverbindung nach Anspruch 7, **dadurch gekennzeichnet, dass** die Graphitdichtung (6) dreifach diagonal geflochten ist.

9. Rohrleitungsverbindung nach Anspruch 7, **dadurch gekennzeichnet, dass** die Graphitdichtung (6') zweifach diagonal geflochten ist.

10. Verwendung einer Graphitdichtung (6, 6'), welche eine Stoßstelle (13) aufweist, an welcher zwei freie Enden (14, 15) der Graphitdichtung (6, 6') miteinander dichtend verpresst sind in einer Rohrleitungsverbindung insbesondere für Abgasleitungen von Kraftfahrzeugen, umfassend eine erste Rohrleitung (1) und eine zweite Rohrleitung (2), welche fluidführend miteinander verbunden sind, wobei die erste Rohrleitung (1) ein erstes Flanschelement (3) und die zweite Rohrleitung (2) ein zweites Flanschelement (4) aufweist, wobei das erste Flanschelement (3) und das zweite Flanschelement (4) einen Einbauraum (5) für die Graphitdichtung (6, 6') ausbilden, wobei die Graphitdichtung (6, 6') unter Verpressung im Einbauraum (5) aufgenommen ist und wobei ein Befestigungsmittel (7) das erste Flanschelement (3) mit dem zweiten Flanschelement (4) verbindet, und wobei ein Begrenzungsmittel (8) vorgesehen ist, welches die Verpressung der Graphitdichtung (6, 6') begrenzt.

## Claims

1. Pipe coupling, in particular for exhaust pipes of motor vehicles, comprising a first pipe (1) and a second pipe (2) connected to one another in a fluid guiding manner, wherein the first pipe (1) has a first flange element (3) and the second pipe (2) has a second flange element (4), wherein the first flange element (3) and the second flange element (4) form an installation space (5) for a graphite seal (6, 6'), wherein the graphite seal (6, 6') is incorporated into the installation space (5) by pressing it in and wherein a fixing element (7) connects the first flange element (3) to the second flange element (4) and wherein a limiting element (8) is provided for restricting the pressing in of the graphite seal (6, 6'),
**characterized in that** the graphite seal (6, 6') has a butt joint (13), two free ends (14, 15) of the graphite seal (6, 6') being pressed sealingly against one another at said joint.

2. Pipe coupling as defined in claim 1, **characterized in that** the limiting element (8) supports the flange elements (3, 4) in relation to the graphite seal (6, 6').

3. Pipe coupling as defined in claim 1 or 2, **characterized in that** the limiting element (8) is integrally formed on the flange elements (3, 4).

4. Pipe coupling as defined in claim 3, **characterized in that** the limiting element (8) abuts on a butt joint (9) of the flange elements (3, 4).

5. Pipe coupling as defined in any one of claims 1 to 4, **characterized in that** both the first flange element (3) and the second flange element (4) have a collar (10, 11) curved radially outwards in a funnel shape, wherein an edge (12) oriented parallel to the pipe axes projects from at least one of the collars (11) as limiting element (8).

6. Pipe coupling as defined in any one of claims 1 to 5, **characterized in that** the fixing element (7) is deigned as a U-shaped or V-shaped clamp.

7. Pipe coupling as defined in any one of claims 1 to 6, **characterized in that** the graphite seal (6, 6') is designed as a graphite sealing ring and is produced from a braided packing consisting of graphite film.

8. Pipe coupling as defined in claim 7, **characterized in that** the graphite seal (6) is triple braided diagonally.

9. Pipe coupling as defined in claim 7, **characterized in that** the graphite seal (6') is double braided diagonally.

10. Use of a graphite seal (6, 6') having a butt joint (13), two free ends (14, 15) of the graphite seal (6, 6') being pressed sealing against one another at said joint, in a pipe coupling, in particular for exhaust pipes of motor vehicles, comprising a first pipe (1) and a second pipe (2) connected to one another in a fluid guiding manner, wherein the first pipe (1) has a first flange element (3) and the second pipe (2) has a second flange element (4), wherein the first flange element (3) and the second flange element (4) form an installation space (5) for the graphite seal (6, 6'), wherein the graphite seal (6, 6') is incorporated into the installation space (5) by pressing it in and wherein a fixing element (7) connects the first flange element (3) to the second flange element (4) and wherein a limiting element (8) is provided for restricting the pressing in of the graphite seal (6, 6').

## Revendications

1. Raccord de tuyaux, en particulier pour des tuyautages d'échappement de véhicules automobiles, comprenant un premier tuyau (1) et un deuxième tuyau (2) reliés l'un à l'autre pour la conduction d'un fluide, le premier tuyau (1) comportant un premier élément de bride (3) et le deuxième tuyau (2) un deuxième élément de bride (4), le premier élément de bride (3) et le deuxième élément de bride (4) formant un espace de montage (5) pour un joint en graphite (6, 6'), le joint en graphite (6, 6') étant monté sous compression dans l'espace de montage (5), un moyen de fixation (7) reliant le premier élément de bride (3) au deuxième élément de bride (4), et un moyen de limitation (8) étant prévu, lequel limite la compression du joint en graphite (6, 6'),
**caractérisé en ce que** le joint en graphite (6, 6') présente un about (13) où deux extrémités libres (14, 15) du joint en graphite (6, 6') sont serrées l'une contre l'autre de manière étanche.

2. Raccord de tuyaux selon la revendication 1, **caractérisé en ce que** le moyen de limitation (8) maintient les éléments de bride (3, 4) face au joint en graphite (6, 6').

3. Raccord de tuyaux selon la revendication 1 ou 2, **caractérisé en ce que** le moyen de limitation (8) est formé sur les éléments de bride (3, 4).

4. Raccord de tuyaux selon la revendication 3, **caractérisé en ce que** le moyen de limitation (8) repose contre un about (9) des éléments de bride (3, 4).

5. Raccord de tuyaux selon l'une des revendications 1 à 4, **caractérisé en ce que** le premier élément de bride (3) ainsi que le deuxième élément de bride (4) présentent un rebord (10, 11) en forme d'entonnoir bombé radialement vers l'extérieur, un bord (12) parallèle aux axes de tuyau dépassant d'au moins un des rebords (11) en tant que moyen de limitation (8).

6. Raccord de tuyaux selon l'une des revendications 1 à 5, **caractérisé en ce que** le moyen de fixation (7) est réalisé sous forme de collier de serrage en U ou en V.

7. Raccord de tuyaux selon l'une des revendications 1 à 6, **caractérisé en ce que** le joint en graphite (6, 6') est réalisé sous forme de bague d'étanchéité en graphite et est fabriqué à partir d'une garniture tressée en feuille graphite.

8. Raccord de tuyaux selon la revendication 7, **caractérisé en ce que** le joint en graphite (6) est tressé trois fois en diagonale.

9. Raccord de tuyaux selon la revendication 7, **caractérisé en ce que** le joint en graphite (6') est tressé deux fois en diagonale.

10. Utilisation d'un joint en graphite (6, 6'), présentant un about (13) où deux extrémités libres (14, 15) du joint en graphite (6, 6') sont serrées l'une contre l'autre de manière étanche, dans un raccord de tuyaux, en particulier pour des tuyautages d'échappement de véhicules automobiles, comprenant un premier tuyau (1) et un deuxième tuyau (2) reliés l'un à l'autre pour la conduction d'un fluide, le premier tuyau (1) comportant un premier élément de bride (3) et le deuxième tuyau (2) un deuxième élément de bride (4), le premier élément de bride (3) et le deuxième élément de bride (4) formant un espace de montage (5) pour le joint en graphite (6, 6'), le joint en graphite (6, 6') étant monté sous compression dans l'espace de montage (5), un moyen de fixation (7) reliant le premier élément de bride (3) au deuxième élément de bride (4), et un moyen de limitation (8) étant prévu, lequel limite la compression du joint en graphite (6, 6').
